# EUROPEAN PATENT SPECIFICATION

(11) **EP 0 771 812 B1**
(45) Date of publication and mention of the grant of the patent: **10.12.2003**
(21) Application number: 96402306.3
(22) Date of filing: 30.10.1996
(51) Int. Cl.: C07F 9/50, C07F 9/46, C07F 9/53

(54) **Method for producing an optically active diphosphine**
Verfahren zur Herstellung eines optischen aktiven Phosphins
Procédé de production d'une diphosphine optiquement active

(30) Priority: 31.10.1995 JP 30521195
(43) Date of publication of application: 07.05.1997
(73) Proprietor: Takasago International Corporation, Tokyo 108 (JP)
(72) Inventor: Sayo, Noboru, Takasago Int. Corp., Hiratsuka-shi, Kanagawa-ken (JP); Zhang, Xiaoyong, Takasago Int. Corp., Hiratsuka-shi, Kanagawa-ken (JP); Oh, Tatsuya, Takasago Int. Corp., Hiratsuka-shi, Kanagawa-ken (JP); Yoshida, Akifumi, Takasago Int. Corp., Hiratsuka-shi, Kanagawa-ken (JP); Yokozawa, Tohru, Takasago Int. Corp., Hiratsuka-shi, Kanagawa-ken (JP)
(74) Representative: Gillard, Marie-Louise

(56) References cited:
- EP-A- 0 403 188
- EP-A- 0 444 930
- WO-A-95/18787
- WO-A-96/38456
- US-A- 5 175 335
- J. AM. CHEM. SOC. (JACSAT,00027863);95; VOL.117 (35); PP.9101-2, KYOTO UNIVERSITY;FACULTY OF SCIENCE; KYOTO; 606-01; JAPAN (JP), XP002022853 HAYASHI T ET AL: "Catalytic asymmetric synthesis of axially chiral biaryls by palladium-catalyzed enantioposition-selective cross-coupling."
- J. ORG. CHEM. (JOCEAH,00223263);93; VOL.58 (7); PP.1945-8, HOKKAIDO UNIV.;SCH. PHARM. SCI.; SAPPORO; 060; JAPAN (JP), XP002022854 UOZUMI Y ET AL: "Synthesis of optically active 2-(diarylphosphino)-1,1'-binaphthyls, efficient chiral monodentate phosphine ligands"
- JOURNAL OF ORGANIC CHEMISTRY, vol. 59, no. 23, 18 November 1994, XP000476926 DONGWEI CAI ET AL: "SYNTHESIS OF CHIRAL 2,2'-BIS(DIPHENYLPHOSPHINO)-1,1'-BINAPHTHY L (BINAP) VIA A NOVEL NICKEL-CATALYZED PHOSPHINE INSERTION"
- CHEMICAL ABSTRACTS, vol. 107, no. 23, 7 December 1987 Columbus, Ohio, US; abstract no. 217849, BONDARENKO N A ET AL: "Simultaneous preparation of diphenylphosphine and diphenylphosphinic acid" XP002022858 & SU 1 325 056 A (ALL-UNION SCIENTIFIC-RESEARCH INSTITUTE OF CHEMICAL REAGENTS AND PURE) 23 July 1987
- J. ORG. CHEM. (JOCEAH,00223263);86; VOL.51 (5); PP.629-35, INST. MOL. SCI.;CHEM. MATER. CENT.; OKAZAKI; 444; JAPAN (JP), XP002022855 TAKAYA H ET AL: "Practical synthesis of (R)- or (S)-2,2'-bis(diarylphosphino)-1,1'-b inaphthyls (BINAPs)"
- J. ORG. CHEM. (JOCEAH,00223263);94; VOL.59 (11); PP.3064-76, KYOTO UNIVERSITY;FACULTY OF ENGINEERING; KYOTO; 606-01; JAPAN (JP), XP002022856 MASHIMA K ET AL: "Cationic BINAP-Ru(II) Halide Complexes: Highly Efficient Catalysts for Stereoselective Asymmetric Hydrogenation of.alpha.- and.beta.-Functionalized Ketones"
- J. AM. CHEM. SOC. (JACSAT,00027863);94; VOL.116 (22); PP.9869-82, DUPONT CENTRAL RESEARCH AND DEVELOPMENT;E328 EXPERIMENTAL STATION; WILMINGTON; 19880-0328; DE; USA (US), XP002012561 CASALNUOVO A L ET AL: "Ligand Electronic Effects in Asymmetric Catalysis: Enhanced Enantioselectivity in the Asymmetric Hydrocyanation of Vinylarenes"
- CHEMICAL ABSTRACTS, vol. 116, no. 20, 18 May 1992 Columbus, Ohio, US; abstract no. 195566, UCHIDA T: "Light stabilizers for preventing fading of organic coloring materials" XP002022859 & JP 03 277 685 A (KONICA CO.;JAPAN) 9 December 1991
- TETRAHEDRON (TETRAB,00404020);94; VOL.50 (21); PP.6145-54, MONTANA STATE UNIV.;DEP. CHEM. BIOCHEM.; BOZEMAN; 59717-0340; MT; USA (US), XP002022857 MCKINSTRY L ET AL: "On the asymmetric Rh(I) catalyzed [4+2] cycloisomerization reaction. Electronic and torsional ligand control of absolute stereoselection"
- CHEMICAL ABSTRACTS, vol. 124, no. 25, 17 June 1996 Columbus, Ohio, US; abstract no. 343650, IWAKURA K ET AL: "Optically active tertiary phosphines, their metal complexes, and preparation of optically active organosilicon compounds" XP002022860 & JP 07 330 786 A (SUMITOMO CHEMICAL CO;JAPAN) 19 December 1995

## Description

### BACKGROUND OF THE INVENTION

### 1. Field of the Invention

The present invention relates to a method for producing optically active diphosphine compounds. The compounds can be ligands to constitute catalysts for various asymmetric synthesis reactions.

### 2. Description of the Related Arts

Up to the present, many reports were made about complexes available for asymmetric synthesis, for example, about transition-metal complexes used for asymmetric hydrogenation, asymmetric isomerization, asymmetric hydrosilylation, or the like. Among these complexes, the complexes which comprise an optically active tertiary phosphine compound coordinated with a complex of a transition metal such as ruthenium, rhodium, iridium and palladium generally exhibit excellent performance, and many phosphine compounds which have special structures were developed up to the present for the purpose of further improving performance [" Yuuki-Kinzoku-Sakutai no Kagaku " ( "Chemistry on Organic Metal Complexes ") edited by Nihon Kagaku-kai, pp.237-238, 1982; Ryoji Noyori, "Asymmetric Catalysis in Organic Synthesis'', published by A Wiley-Interscience Publication].

Particularly, 2,2'-bis(diphenylphosphino)-1,1'-binaphthyl (hereinafter, referred to merely as BINAP) is recognized as an optically active phosphine having excellent properties, and a report has already been made about a rhodium complex and a ruthenium complex with which BINAP is coordinated as a ligand (Japanese Unexamined Patent Publications No. 55-61973 and No. 61-6390, respectively). Further, a rhodium complex and a ruthenium complex with which 2,2'-bis[di-(p-tolyl)phosphino]-1,1'-binaphthyl (hereinafter, referred to as p-TolBINAP) is coordinated as a ligand were reported as effective in asymmetric hydrogenation and asymmetric isomerization (Japanese Unexamined Patent Publications No. 60-199898 and No. 61-63690, respectively). Moreover, a ruthenium complex of 2,2'-bis[di-(3,5-dialkylphenyl)phosphino]-1,1'-binaphthyl was reported as effective in asymmetric hydrogenation of β-ketoesters in Japanese Unexamined Patent Publication No. 3-25509. Even by using these phosphine complexes, however, selectivity such as chemo-selectivity or enantio-selectivity, catalytic activity, and persistency are generally unsatisfactory in some reactions or in reactions using certain kinds of substrates.

As a conventional method for producing those phosphine compounds, the following industrial method is widely known: Racemic binaphthol is brominated with triphenylphosphine-dibromide at a high temperature (240 - 320°C); after introduction to the Grignard reagent, the resultant is condensed with diarylphosphinylchloride to be phosphinedioxide; and after optical resolution, the resultant is transformed into a tertiary phosphine compound ( a kind of BINAP) with a reductant such as trichlorosilane (H. Takaya, K. Mashima, K. Koyano, M. Yagi, H. Kumobayashi, T. Takemori, S. Akutagawa, and R. Noyori, *J. Org. Chem*., vol. 51, p.629, 1986). Additionally, another method for synthesizing BINAP has been offered (Dongwei Cai, Joseph F. Payyach, Dean R. Bender, David L. Hughes, Thomas R. Verhoeven, and Paul J. Reider, *J. Org. Chem*., vol. 59, pp.7180-7181, 1994; the specification of U.S. Patent No. 5,399,711). In this method, 2,2'-bis(trifluoromethanesulfonyloxy)-1,1'-binaphthyl which is synthesized using an optically active binaphthyl is put into reaction with diphenylphosphine in the presence of a nickel-phosphine complex to synthesize BINAP.

Cationic BINAP-Ru (II) halide complexes useful as catalysts for stereoselective asymmetric hydrogenation of α- and β-functionalised ketones are disclosed in K-Mashima et al., J.Org.chem., 1994, 59, 3064-3076.

K. Iwakuna et al., Chemical abstracts, vol.124, n° 25, 17 June 1996, abstract n° 343650p and JP-A-07 330 786 disclose transition metal complexes of optically active tertiary phosphines useful for catalysing the asymmetric hydrosylilation of an olefin for preparing an optically active organosilicon compound.

Each of the above-mentioned methods for producing optically active phosphine compounds, however, has some drawbacks. For example, the former method requires a high temperature in bromination of binaphthol, and requires a special reaction vessel due to generation of hydrobromic acid during bromination. Further, the former method also requires optical resolution of racemic modification, and therefore, the cost will be high in such a case as where only one of the enantiomorphic isomers is desired. Moreover, optical resolution is difficult in many such compounds. On the other hand, the latter method does not require optical resolution of racemic modification. However, diphenylphosphine, which is used in the latter method, is not suitable for industrial uses in a large quantities in view of stability (diphenylphosphine is easily oxidized), stench, and toxicity.

Meanwhile, since chiral compounds are highly useful, there is a strong demand for development of an optical phosphine compound which has a selectivity such as chemo-selectivity or enantio-selectivity and a catalytic activity different from those of conventional BINAP compounds.

### SUMMARY OF THE INVENTION

The Inventors of the present invention conducted investigations to solve the above-mentioned problems. As a result, the Inventors obtained the following findings and accomplished the present invention: An optically active diphosphine compound (2,2'-bis(di-substituted phosphino)-1,1'-binaphthyl) and/or an optically active diphosphinemonooxide compound (2-di-substituted phosphinyl-2'-di-substituted phosphino-1,1'-binaphthyl) can be easily synthesized by putting 2,2'-bis(trifluoromethanesulfonyloxy)-1,1'-binaphthyl into reaction with di-substituted phosphineoxide in the presence of a transition metal-phosphine complex; and the optically active diphosphinemonooxide compound can be easily reduced to synthesize an optically active diphosphine compound.

Specifically, an aspect of the present invention is as follows.
(1) A method for producing an optically active diphosphine having the following general formula I, 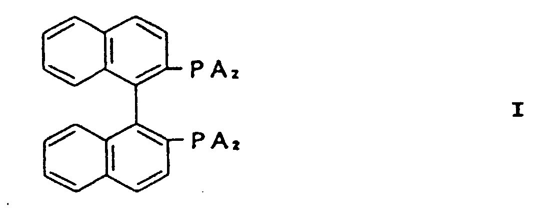 (wherein A indicates a phenyl group; a mono- to tri-substituted phenyl group, wherein each substituent in the substituted phenyl group is selected from halogen atoms, lower alkyl groups, lower alkoxy groups or lower halogenated-alkoxy groups such that one or more of the substituents may be the same or different; a naphthyl group; a lower-alkyl naphthyl group; or a lower-alkoxy naphthyl group),
   characterized in that 2,2'-bis(trifluoromethanesulfonyloxy)-1,1'-binaphthyl expressed by the following general formula II, 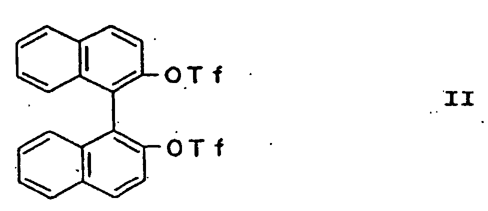 (wherein Tf indicates a trifluoromethanesulfonyl group), is reacted with a phosphineoxide compound expressed by the following chemical formula III,

   A₂P(O)H III

   (wherein A indicates the same group as in the above general formula I),
   in the presence of a Ni-phosphine complex, to give an optically active diphosphinemonooxide compound IV 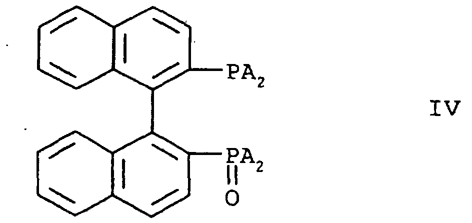 or a mixture containing an optically active diphosphine compound I and said compound IV, and said compound IV or the mixture containing it is reduced to give compound I.
(2) The method for producing an optically active diphosphine according to the description in (1) above, wherein A in the above general formulae I and III is selected from a phenyl group, a 4-tolyl group, a 3-tolyl group, a 3,5-xylyl group, a 3,4,5-trimethylphenyl group, a 4-methoxyphenyl group, a 3-methoxyphenyl group, a 3,5-dimethoxyphenyl group, a 3,4,5-trimethoxyphenyl group, a 3,5-dimethyl-4-methoxyphenyl group, a 3,4-methylenedioxyphenyl group, a 4-tert-butylphenyl group, a 3,5-di-tert-butylphenyl group, a 4-chlorophenyl group, a 4-fluorophenyl group, a 4-trifluoromethylphenyl group, a 3-trifluoromethylphenyl group, a 4-dimethylaminophenyl group, a 4-biphenyl group, a 3-biphenyl group, an α-naphthyl group, a β-naphthyl group, a 6-methoxy-α-naphthyl group, and a 6-methoxy-β-naphthyl group.

An optically active 2,2'-bis(di-substituted phosphino)-l,l'-binaphthyl of the present invention can be synthesized according to, for example, the following reaction formula.

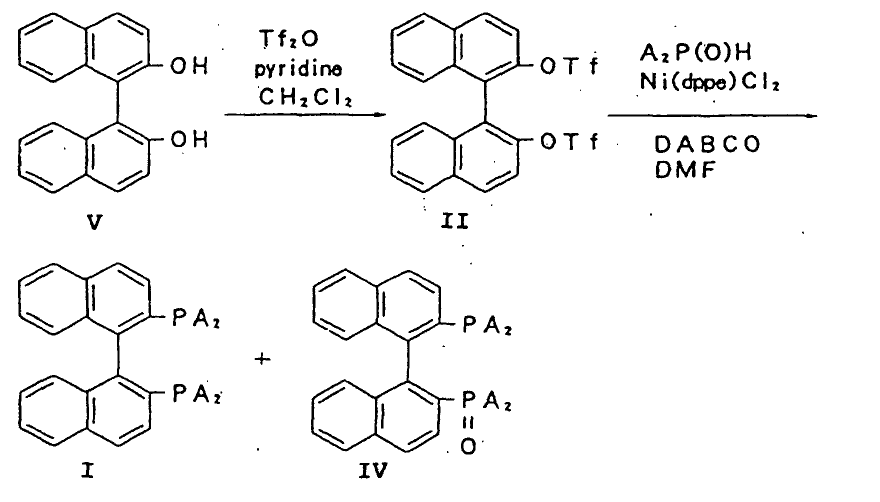

Specifically, an optically active binaphthol (V) is introduced into 2,2'-bis(trifluoromethanesulfonyloxy)-1,1'-binaphthyl (II) by any of the methods described in articles (M. Vondenhof and J. Mattay, Tetrahedron Lett., vol. 31, pp.985-988, 1990; L. Kurz, G. Lee, D. Morgans, Jr., M. J. Waldyke and T. Ward, *Tetrahedron Lett*., vol. 31, pp.6321-6324, 1990; and Y. Uozumi, A. Tanahashi, S. Y. Lee and T. Hayashi, J. Org. Chem., vol. 58, pp.1945-1948, 1993), and subsequently, the resultant is reacted with a di-substituted phosphineoxide (III) in the presence of a catalytic amount of a transition metal-phosphine complex to synthesize a mixture which contains an optically active diphosphine compound (2,2'-bis(di-substituted phosphino)-1,1'-binaphthyl) (I) and/or an optically active diphosphinemonooxide compound (2-di-substituted phosphinyl-2'-di-substituted phosphino-1,1'-binaphthyl) (IV). Additionally, the above optically active diphosphinemonooxide compound (IV) can be easily transformed into the optically active diphosphine compound (I) by reduction.

In practice, as is typically shown in Example 1-(2) below, a mixture which contains principally (S)-2-di(2-naphthyl)phosphinyl-2'-di(2-naphthyl)phosphino -1,1'-binaphthyl as the optically active diphosphinemonooxide compound (IV) can be synthesized by using di(2-naphthyl)phosphineoxide as the di-substituted phosphine oxide (III).

Further, as is typically shown in Example 1-(4) below, a mixture which contains principally (R)-2,2'-bis[di(4-trifluoromethylphenyl)phosphino]-1,1'- binaphthyl as the optically active diphosphine compound (I) can be synthesized by using di(4-trifluoromethylphenyl)phosphineoxide as the di-substituted phosphine oxide (III).

Moreover, as is typically shown in Example 2 below, a mixture which contains principally (R)-2-diphenylphosphinyl-2'-diphenylphosphino-1,1'-binaphthyl as the optically active diphosphinemonooxide compound (IV) and (R)-2,2'-bis(diphenylphosphino)-1,1'-binaphthyl as the optically active diphosphine compound (I) can be synthesized by using diphenylphosphineoxide as the di-substituted phosphine oxide (III).

The functional group, A, in a di-substituted phosphineoxide (III) used in the above reaction is a phenyl group; a mono- to tri-substituted phenyl group, wherein each substituent in the substituted phenyl group is selected from halogen atoms, lower alkyl groups, lower alkoxy groups or lower halogenated-alkoxy groups such that one or more of the substituents may be the same or different; a naphthyl group; a lower-alkyl naphthyl group; or a lower-alkoxy naphthyl group. Here, the word "lower" means having 1 to 4 carbon atoms.

Amongst them, all the compounds, except for the one for which A indicates a phenyl group, are new.

Typical examples of the functional group, A, may include a phenyl group, a 4-tolyl group, a 3-tolyl group, a 3,5-xylyl group, a 3,4,5-trimethylphenyl group, a 4-methoxyphenyl group, a 3-methoxyphenyl group, a 3,5-dimethoxyphenyl group, a 3,4,5-trimethoxyphenyl group, a 3,5-dimethyl-4-methoxyphenyl group, a 3,4-methylenedioxyphenyl group, a 4-tert-butylphenyl group, a 3,5-di-tert-butylphenyl group, a 4-chlorophenyl group, a 4-fluorophenyl group, a 4-trifluoromethylphenyl group, a 3-trifluoromethylphenyl group, a 4-dimethylaminophenyl group, a 4-biphenyl group, a 3-biphenyl group, an α-naphthyl group, a β-naphthyl group, a 6-methoxy-α-naphthyl group, and a 6-methoxy-β-naphthyl group.

The amount of substituted phosphineoxide to be used should be 2 to 5 times mole equivalent weight, and preferably, 3 to 4 times mole equivalent weight of the amount of ditrifluoromethanesulfonyloxy binaphthyl (triflate).

Di-substituted phosphineoxide (III) should preferably be recrystallized, or purified with a silica gel column before being used.

Incidentally, di-substituted phosphineoxide (III) can be synthesized according to the methods offered by B. B. Hunt, B. C. Saunders, et al. (*J. Chem. Soc*., pp.2413-2414, 1957) and by H. R. Hays, et al. (*J. Org. Chem*., vol. 33, pp.3690-3694, 1968). Specifically, the Grignard reagent is used as AX, and reacted with diethyl phosphite. The reaction formula is shown below.

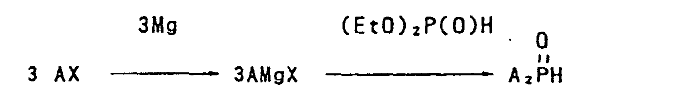

The transition metal-phosphine complex to be used in the above reaction with a catalytic amount according to the present invention may include a complex coordinated with copper, iron, cobalt, nickel, palladium, or the like. Typical examples of such transition metal-phosphine complexes are described in the following list, where the abbreviation, Me, indicates methyl, Ph indicates phenyl, dppe indicates 1,2-bis(diphenylphosphino)ethane, dppp indicates 1,3-bis(diphenylphosphino)propane, and dppb indicates 1,4-bis(diphenylphosphino)butane.
- Cu:: CuMe(PPh₃)₃, Cu(Me)₂(dppe), CuCl(PPh₃)₃
- Fe:: Fe(Co)₂(PPh₃)₃, FeCl₂(PPh₃)₂, FeCl₂(dppe), FeHCl(dppe), FeCl₃(PPh₃)₃, FeCl₂(dppp), FeCl₂(dppb)
- Co:: CoCl(PPh₃)₃, CoCl₂(dppe), CoCl₂(dppp), CoCl₂(dppb)
- Ni:: Ni(PPh₃)₄, Ni(PPh₃)₂, NiCl₂(dppe), NiCl₂(dppp), NiCl₂(dppb)
- Pd:: PdCl₂(PPh₃)₂, PdCl₂(dppe), PdCl₂(dppp), PdCl₂(dppb)

The examples of the base to be used together in the reaction of the present invention are 1,4-diazabicyclo[2.2.2]octane (DABCO), diazabicycloundecene (DBU), tetramethylethylenediamine (TMEDA), dimethylaniline, 1,4-dimethylpiperazine, 1-methylpiperidine, 1-methylpyrrolidine, quinuclidine, 1-methylmorpholine, triethylamine, diisopropylethylamine, 1-methyl-2,2,6,6-tetramethylpiperidine.

Further, the examples of the solvent to be used in the reaction of the present invention are N,N-dimethylformamide (DMF), dimethylsulfoxide (DMSO), N-methylpyrrolidone (NMP), dimethylacetamide (DMA).

The reaction temperature ranges generally from 80 to 140°C, and preferably, 100 to 120°C.

In the conditions as described above, a mixture containing an optically active diphosphine compound [2,2'-bis(di-substituted phosphino)-1,1'-binaphthyl] (I) and/or an optically active diphosphinemonooxide compound [2-di-substituted phosphinyl-2'-di-substituted phosphino-1,1'-binaphthyl] (IV) can be easily produced from 2,2'-bis(trifluoromethanesulfonyloxy)-1,1'-binaphthyl (II).

Further, the diphosphinemonooxide compound [2-di-substituted phosphinyl-2'-di-substituted phosphino-1,1'-binaphthyl] (IV) or a mixture containing the same can, after purification or directly, be reduced into an optically active diphosphine compound as the objective product, i.e., 2,2'-bis(di-substituted phosphino)-1,1'-binaphthyl derivative (I) with a reductant such as trichlorosilane according to the reaction formula below.

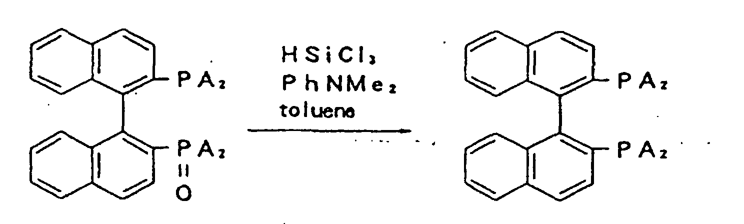

2,2'-bis(di-substituted phosphino)-1,1'-binaphthyl (I) which can be obtained according to the present invention can be a ligand to form a complex with a transition metal.

The examples of such a transition metal are rhodium, ruthenium, iridium, palladium, and nickel.

For preparation of such transition-metal complexes, publicly-known methods as described below can be employed. As to abbreviations used in the below-described general formulae of various transition-metal complexes, L indicates the diphosphine compound expressed by the general formula I, cod indicates 1,5-cyclooctadiene, nbd indicates norbornadiene, Ph indicates a phenyl group, and Ac indicates an acetyl group.

### Rhodium complex:

According to the method described in Jikken-Kagaku Kouza (Experimental Chemistry), 4th edition, vol. 18, "Yuuki-Kinzoku-Sakutai" ("Organometallic Complex"), pp.339-344 (1991) edited by Nihon Kagaku-kai and published by Maruzen Co., a rhodium complex can be produced by reacting 2,2'-bis(di-substituted phosphino)-1,1'-binaphthyl (I) of the present invention with bis(cycloocta-1,5-diene)rhodium(I)tetrafluoroborate.

The following are practical examples of such rhodium complexes.
Rh(L)Cl, Rh(L)Br, Rh(L)I, [Rh(cod)(L)]BF₄,
[Rh(cod)(L)]ClO₄, [Rh(cod)(L)]PF₆, [Rh(cod)(L)]BPh₄,
[Rh(nbd)(L)]BF₄, [Rh(nbd)(L)]ClO₄, [Rh(nbd)(L)]PF₆,
[Rh(nbd)(L)]BPh₄

### Ruthenium complex:

According to the method described in J. Chem Soc., Chem. Commun., p.922 (1988), a ruthenium complex can be produced by heat-refluxing 2,2'-bis(di-substituted phosphino)-1,1'-binaphthyl (I) and [Ru(cod)Cl₂]ₙ in the presence of triethylamine in a toluene solvent. Alternatively, according to the method described in *J. Chem. Soc*., Chem. Commun., p.1208 (1989), a ruthenium complex can be produced by heating and stirring 2,2'-bis(di-substituted phosphino)-1,1'-binaphthyl (I) and [Ru(p-cymene)I₂]₂ together with methylene chloride and ethanol.

The following are practical examples of such ruthenium complexes.
Ru(OAc)₂(L), Ru₂Cl₄(L)₂N(C₂H₅)₃,
[RuCl(benzene)(L)]Cl, [RuBr(benzene)(L)]Br,
[RuI(benzene)(L)]I, [RuCl(p-cymene)(L)]Cl,
[RuBr(p-cymene)(L)]Br, [RuI(p-cymene)(L)]I,
[Ru(L)](BF₄)₂, [Ru(L)](ClO₄)₂,
[Ru(L)](PF₆)₂, [Ru(L)](BPh₄)₂

### Iridium complex:

According to the method described in *J. Organomet. Chem*., vol. 428, p.213 (1992), a iridium complex can be produced by reacting 2,2'-bis(di-substituted phosphino)-1,1'-binaphthyl (I) and [Ir(cod)(CH₃CN)₂]BF₄ in tetrahydrofuran while stirring.

The following are practical examples of such iridium complexes.
Ir(L)Cl, Ir(L)Br, Ir(L)I, [Ir(cod)(L)]BF₄,
[Ir(cod)(L)]ClO₄, [Ir(cod)(L)]PF₆, [Ir(cod)(L)]BPh₄,
[Ir(nbd)(L)]BF₄, [Ir(nbd)(L)]ClO₄, [Ir(nbd)(L)]PF₆,
[Ir(nbd)(L)]BPh₄

### Palladium complex:

According to the method described in *J. Am. Chem. Soc*., vol. 113, p.9887 (1991), a palladium complex can be produced by reacting 2,2'-bis(di-substituted phosphino)-1,1'-binaphthyl (I) and π-allylpalladiumchloride.

The following are practical examples of such palladium complexes.
PdCl₂(L), (π-allyl)Pd(L), [Pd(L)]BF₄, [Pd(L)]ClO₄,
[Pd(L)]PF₆, [Pd(L)]BPh₄

### Nickel complex:

According to the method described in Jikken-Kagaku Kouza (Experimental Chemistry), 4th edition, vol. 18, "Yuuki-Kinzoku-Sakutai" ( "Organometallic Complex" ), p.376 (1991) edited by Nihon Kagaku-kai and published by Maruzen Co., a nickel complex can be produced by heating and stirring 2,2'-bis(di-substituted phosphino)-1,1'-binaphthyl (I) and nickel chloride which are dissolved in a mixture of isopropanol and methanol.

The following are practical examples of such nickel complexes.
NiCl₂(L), NiBr₂(L), NiI₂(L)

According to the present invention, there is provided a method for producing a low-cost and optically active diphosphine compound [2,2'-bis(di-substituted phosphino)-1,1'-binaphthyl] by using optically active binaphthol as a raw material. In addition, according to the present invention, an optically active diphosphine compound can be obtained by first synthesizing a novel or known diphosphinemonooxide compound (2-di-substituted phosphinyl-2'-di-substituted phosphino-1,1'-binaphthyl) and subsequently reducing said compound.

A transition-metal complex which can be synthesized from an optically active phosphine compound can provide objective products with a high yield, and particularly, with high enantio-selectivity when being used as a catalyst in asymmetric synthesis, and more specifically, in a reaction such as asymmetric hydrogenation and asymmetric hydrosilylation. Further, an objective product having a structure of desired absolute configuration can be obtained in a reaction of asymmetric synthesis by using, as a catalyst, a transition-metal complex which has a ligand selected from either (-) and (+) isomers of the ligands relating to the present invention.

### DESCRIPTION OF THE PREFERRED EMBODIMENTS

According to the present invention, a mixture containing an optically active diphosphine compound [2,2'-bis(di-substituted phosphino)-1,1'-binaphthyl] (I) and/or an optically active diphosphinemonooxide compound (2-di-substituted phosphinyl-2'-di-substituted phosphino-1,1'-binaphthyl) (IV) is produced by reacting 2,2'-bis(trifluoromethanesulfonyloxy)-1,1'-binaphthyl expressed by the following general formula II, 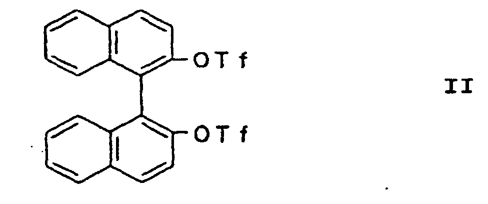 (wherein Tf indicates a trifluoromethanesulfonyl group), with a phosphineoxide compound expressed by the following chemical formula III,

A₂P(O)H III

(wherein A is selected from a phenyl group, a 4-tolyl group, a 3-tolyl group, a 3,5-xylyl group, a 3,4,5-trimethylphenyl group, a 4-methoxyphenyl group, a 3-methoxyphenyl group, a 3,5-dimethoxyphenyl group, a 3,4,5-trimethoxyphenyl group, a 3,5-dimethyl-4-methoxyphenyl group, a 3,4-methylenedioxyphenyl group, a 4-tert-butylphenyl group, a 3,5-di-tert-butylphenyl group, a 4-chlorophenyl group, a 4-fluorophenyl group, a 4-trifluoromethylphenyl group, a 3-trifluoromethylphenyl group, a 4-dimethylaminophenyl group, a 4-biphenyl group, a 3-biphenyl group, an α-naphthyl group, a β-naphthyl group, a 6-methoxy-α-naphthyl group, and a 6-methoxy-β-naphthyl group), in the presence of a transition metal-phosphine complex.

The above mixture containing the optically active diphosphine compound and/or an optically active diphosphinemonooxide compound is purified or further reduced with a reductant such as trichlorosilane to produce an optically active diphosphine compound expressed by the general formula I, 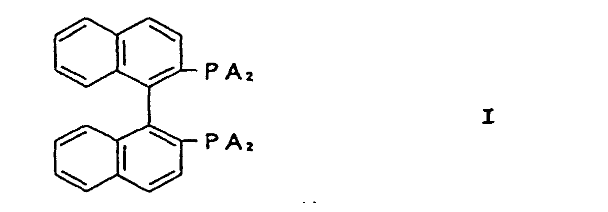 (wherein A is selected from a phenyl group, a 4-tolyl group, a 3-tolyl group, a 3,5-xylyl group, a 3,4,5-trimethylphenyl group, a 4-methoxyphenyl group, a 3-methoxyphenyl group, a 3,5-dimethoxyphenyl group, a 3,4,5-trimethoxyphenyl group, a 3,5-dimethyl-4-methoxyphenyl group, a 3,4-methylenedioxyphenyl group, a 4-tert-butylphenyl group, a 3,5-di-tert-butylphenyl group, a 4-chlorophenyl group, a 4-fluorophenyl group, a 4-trifluoromethylphenyl group, a 3-trifluoromethylphenyl group, a 4-dimethylaminophenyl group, a 4-biphenyl group, a 3-biphenyl group, an α-naphthyl group, a β-naphthyl group, a 6-methoxy-α-naphthyl group, and a 6-methoxy-β-naphthyl group).

The optically active diphosphine compounds obtained by the above method can form complexes with transition metals. Such transition-metal complexes are very useful as catalysts for asymmetric synthesis.

The present invention will be further illustrated with the following examples, which are not directed to limiting the scope of the present invention.

Incidentally, the following are the apparates used for measurement of physico-chemical properties in each examples below.
¹H NMR: Bruker AM400 (400 MHz)
³¹P NMR: Bruker AM400 (162 MHz)
Melting Point (mp): Yanaco MP-500D
Optical Rotation: Nihon Bunkou DIP-4
GLC: HEWLETT Packard 5890-II
HPLC: Shimazu LC10AT and SPD10A
MASS: Hitachi M-80B

### Example 1

### (1) Synthesis of (S)-2,2'-bis(trifluoromethanesulfonyloxy)-1,1'-binaphthyl

36.2 g (127 mmol) of (S)-binaphthol and 25.2 g (319 mmol) of pyridine were dissolved in 181 ml of methylene chloride and cooled to 0°C. To this mixture, 76.5 ml (271 mmol) of triflic anhydride (trifluoromethanesulfonic anhydride) was dropwise added and then stirred for 18 hours at room temperature. To the reaction mixture thus obtained, 200 ml of a 2 N hydrochloric acid solution was added for washing. The organic layer was washed with water and with a sodium chloride solution. Subsequently, the solvent was distilled off to obtain 69.3 g of a crude product. This crude product was then dissolved in 280 ml of hexane and recrystallized to obtain 64.1 g (yield 92%) of the objective compound. A physico-chemical property is as follows.
¹H NMR (CDCl₃) δ 7.25 - 8.15 ( m, ArH)

### (2) Synthesis of (S)-2-di(2-naphthyl)phosphinyl-2'-di(2-naphthyl)phosphino-1,1'-binaphthyl

19.92 g (36.2 mmol) of (S)-2,2'-bis(trifluoromethanesulfonyloxy)-1,1'-binaphthyl, 3.82 g (7.2 mmol) of NiCl₂ (dppe), and 11.8 g (119.4 mmol) of N-methylpiperidine were dissolved in 80 ml of DMF, and stirred for 15 min. at room temperature and for another 15 min. at 100°C. To this mixture, 41.6 g (137.5 mmol) of di(2-naphthyl)phosphineoxide dissolved in 100 ml of DMF was added and stirred for 24 hours at 100°C. The reaction mixture thus obtained was cooled to room temperature. After the solvent was distilled off, 75 ml of methylene chloride was added to the residue. The resultant solution was cooled in a icecold bath, subjected to the gradual addition of 240 ml of a 1 N hydrochloric acid solution by dropping, and stirred at room temperature for 24 min. After the separation of liquid layers, the aqueous layer was subjected to extraction with methylene chloride. The resultant organic layer was recovered and washed with water, and dried with magnesium sulfate. After being concentrated by decreasing the solvent, the resultant was subjected to purification by silica gel chromatography (hexane:ethyl acetate = 4:1 to 1:4) to obtain 40.0 g (yield 40%) of the objective compound as yellowish white crystals. Physico-chemical properties of the product are as follows.
mp 285 to 287°C
[α]_{D}²⁴ -51.4° (c 1. 08, CHCl₃)
¹H NMR (CDCl₃) d 6.45 to 8.17 (m, ArH)
³¹P NMR (CDCl₃) **δ** -13.05(S) 28.28(s)
CI-Mass spectrum m/z 840 (M⁺ +H+1)

### (3) Synthesis of (S)-2,2'-bis[di(2-naphthyl)phosphino]-1,1'-binaphthyl

15.04 g (17.9 mmol) of (S)-2-di(2-naphthyl)phosphinyl-2'-di(2-naphthyl)phosphino-1,1'-binaphthyl and 12.5 g (103 mmol) of dimethylaniline were dissolved in 270 ml of toluene. To this solution, 14.1 g (104 mmol) of trichlorosilane was added, and stirred at 90°C for 1 hour and for 28 hours while refluxing. The reaction mixture thus obtained was cooled in a icecold bath, and 120 ml of a 20% NaOH solution was added. The resultant aqueous layer was subjected to extraction with toluene. The obtained organic layer was then washed with 50 ml of water, with 10 ml of a 2 N hydrochloric acid solution, and with 50 ml of water. After concentration of the solvent, the resultant solution was subjected to purification by silica gel chromatography (hexane:ethyl acetate = 1:0 to 1:1) to obtain 14.9 g (yield 87%) of the objective compound as white solids. Physico-chemical properties of the product are as follows.
mp 291 to 293°C
[α]_{D}²⁴ -132.2° (c 0.99, CHCl₃)
³¹P NMR (CDCl₃) δ -13.57(S)
CI-Mass spectrum m/z (M⁺ +H+1)

### (4) Synthesis of (R)-2,2'-bis[di(4-trifluoromethylphenyl) phosphino]-1,1'-binaphthyl

1.01 g (1.83 mmol) of (R)-2,2'-bis(trifluoromethanesulfonyloxy)-1,1'-binaphthy 1, 97 mg (0.18 mmol) of NiCl₂ (dppe), 2.48 g (7.33 mmol) of di(4-trifluoromethylphenyl)phosphineoxide, and 457 mg (4.1 mmol) of DABCO were dissolved in 10 ml of DMF and stirred at 100°C for 48 hours. The reaction mixture thus obtained was concentrated and subjected to the addition of 30 ml of methylene chloride, and then washed with water. The resultant was further washed with 10 ml of a 5% hydrochloric acid solution and with a saturated sodium chloride solution, and subsequently, dried with magnesium sulfate. After concentration of the solvent, the resultant solution was subjected to purification by silica gel chromatography (hexane:ethyl acetate = 4:1 to 1:4) to obtain 0.57 g (yield 34%) of the objective compound as yellowish white crystals. Physico-chemical properties of the product are as follows.
mp 62 to 64°C
[α]_{D}²⁵ 3.57° (c 0.50, CHCl₃)
³¹P NMR (CDCl₃) **δ** 5 . 4 ppm
CI-Mass spectrum m/z 912 (M⁺)

### Example 2

### (1) Synthesis of (R)-2-diphenylphosphinyl-2'-diphenyl-phosphino-1,1'-bina phthyl

2.05 g (3.7 mmol) of (R)-2,2'-bis(trifluoromethanesulfonyloxy)-1,1'-binaphthy 1, 0.20 g (0.37 mmol) of NiCl₂ (dppe), 2.89 g (13.3 mmol) of diphenylphosphineoxide, and 1.13 g (11.4 mmol) of N-methylpiperidine were dissolved in 16 ml of DMF and stirred at 100°C for 39 hours. The reaction mixture thus obtained was cooled to room temperature. After the solvent was distilled off, 20 ml of methylene chloride was added to the residue. The resultant solution was cooled in a icecold bath, subjected to the gradual addition of 100 ml of a 2 N hydrochloric acid solution by dropping, and stirred at room temperature for 30 min. After the separation of liquid layers, the aqueous layer was subjected to extraction with methylene chloride. The resultant organic layer was recovered and washed with water, and dried with magnesium sulfate. After concentration of the solvent, the resultant was subjected to purification by silica gel chromatography (hexane:ethyl acetate = 4:1 to 1:4) to obtain 0.83 g (yield 35%) of the objective compound as yellowish white crystals. Physico-chemical properties of the product are as follows.
mp 236 to 238°C
[α]_{D}²⁵ +97.5° (c 0.82, CHCl₃)
¹H NMR (CDCl₃) δ 6.65 to 7.91 (m, ar)
³¹P NMR (CDCl₃) δ -14.55(S) 27.74(S)
CI-Mass spectrum m/z 622 (M⁺)

### (2) Synthesis of (R)-2,2'-bis(diphenylphosphino)-1,1'-binaphthyl

0.95 ml (9.4 mmol) of trichlorosilane was added to a mixture comprising 1.5 g (2.35 mmol) of (R)-2-diphenylphosphinyl-2'-diphenylphosphino-1,1'-binaphthyl, 4.8 ml (4.4 mmol) of dimethylaniline, and 30 ml of toluene. The resultant mixture was then stirred at 90°C for 1 hour and for 16 hours while refluxing. The reaction mixture thus obtained was cooled in a icecold bath, and 20 ml of a 3 N NaOH solution was added. The resultant aqueous layer was subjected to extraction with toluene. The obtained organic layer was then washed with 10 ml of water, with 20 ml of a 1 N hydrochloric acid solution, and with 10 ml of water. After concentration of the solvent, the resultant solution was subjected to purification by silica gel chromatography (hexane:ethyl acetate = 1:0 to 1:1) to obtain 1.34 g (yield 92%) of the objective compound as white solids. Physico-chemical properties of the product are as follows.
mp 241 to 242°C
[α]_{D}²⁴ +228° (c 0.68, benzene)
³¹P NMR (CDCl₃) δ -12.8(s)
CI-Mass spectrum m/z 622 (M⁺)

### Examples 3 - 5

Based on the procedure in the above Examples 1 and 2, several diphosphinemonooxide compounds (I) were produced. Some examples of the practically obtained compounds are listed in Table 1 below.

**Table 1**

| Example No. | A | Phisico-Chemical Properties |
|---|---|---|
| 3 | 4-fluorophenyl | mp: 120 to 125°C [α]_{D}²⁵: 54.1° (c 0.32, CHCl₃) ³¹P NMR (CDCl₃): -16.8, 26.2 ppm CI-MS: 711 (M⁺ +H) |
| 4 | 3,5-dimethoxyphenyl | mp: 104 to 107°C [α]_{D}²⁵: 56.5° ( c 0.32, CHCl₃) ³¹P NMR (CDCl₃): -10.6, 28.9 ppm CI-MS: 880 (M⁺ +H-1) |
| 5 | 3,4-methylenedioxyphenyl | mp: 158 to 159°C [α]_{D}²⁵: -37.49° (c 1.06, CHCl₃) ³¹P NMR (CDCl₃): -10.7, -1.7 ppm CI-MS: 815 (M⁺ +H) |

### Examples 6 - 8

Based on the procedure in the above Examples 1 and 2, several diphosphine compounds (I) were produced. Some examples of the practically obtained compounds are listed in Table 2 below.

**Table 2**

| Example No. | A | Phisico-Chemical Properties |
|---|---|---|
| 6 | 4-fluorophenyl | mp: 213°C [α]_{D}²⁵: 92.5° (c 0.50, CHCl₃) ³¹P NMR (CDCl₃): -16.6 ppm CI-MS: 695 (M⁺ +H) |
| 7 | 3,5-dimethoxyphenyl | mp: 89 to 94°C [α]_{D}²⁵: 131.1° (c 0.51, CHCl₃) ³¹P NMR (CDCl₃): -10.9 ppm CI-MS: 863 (M⁺ +H-1) |
| 8 | 3,4-methylenedioxyphenyl | mp: 119 to 120°C [α]_{D}²⁵: 13.2° (c 1.03, CHCl₃) ³¹P NMR (CDCl₃): -12.1 ppm CI-MS: 815 (M⁺ +H) |

### Referential Examples 1 - 5

### Synthesis of Ruthenium Complexes and Rhodium Complexes

Ruthenium complexes and rhodium complexes were produced by using diphosphine compounds obtained in Examples 2 and 6 - 8 as ligands.

Each Ruthenium complex was produced as follows.

48.9 mg (0.05 mmol) of [Ru(p-cymene)I₂]₂ and 0.1 mmol of a ligand were dissolved in a mixed solution comprising 6 ml of methylene chloride and 3 ml of EtOH, and stirred at 50°C for 3 hours. After removing the solvent, the resultant solid was subjected to NMR analysis.

Meanwhile, each rhodium complex was produced as follows.

40.5 mg (0.1 mmol) of [Rh(cod)₂]BF₄ and 0.1 mmol of a ligand were dissolved in a mixed solution comprising 5 ml of THF and 5 ml of methylene chloride, and stirred at room temperature for 2 hours. After removing the solvent, the resultant solid was subjected to NMR analysis.

The results of the above analyses are shown in Table 3 below.

**Table 3**

| Referential Example No. | A | Ruthenium Complex | Rhodium Complex |
|---|---|---|---|
| 1 | naphthyl | [RuI(p-cymene)(L)]I ³¹P NMR (CDCl₃)δ 26.17(d.J=60Hz) 41.69(d.J=60Hz) | [Rh(cod)(L)]BF4 ³¹P NMR (CDCl₃)δ 27.18(d.J=145.9Hz) |
| 3 | 4-fluorophenyl | [RuI(p-cymene)(L)]I ³¹P NMR (CDCl₃)d 23.5(d.J=60Hz) 39.3(d.J=60Hz) | [Rh(cod)(L)]BF4 ³¹P NMR (CDCl₃)d 24.65(d.J=145.9Hz) |
| 4 | 3,5-dimethoxyphenyl | [RuI(p-cymene)(L)]I ³¹P NMR (CDCl₃)d 28.1(d.J=58.2Hz) 43.9(d.J=58.3Hz) | [Rh(cod)(L)]BF4 ³¹P NMR (CDCl₃)d 29.35(d.J=145.9Hz) |
| 5 | 3,4-methylenedioxyphenyl | [RuI(p-cymene)(L)]I ³¹P NMR (CDCl₃)d 26.6(d.J=52.5Hz) 41.9(d.J=59.8Hz) | [Rh(cod)(L)]BF₄ ³¹P NMR (CDCl₃)d 27.55(d.J=147.7Hz) |

### Referential Example 6

Hydrogenation of methyl 2-benzamidemethyl-3-oxobutyrate was performed using a ruthenium complex which has a diphosphine compound as the ligand.

13 mg (0.01 mmol) of [RuI(p-cymene)(3,4-methylenedioxyphenyl-BINAP)] synthesized in Referential Example 5, 2.49 g (10 mmol) of methyl 2-benzamidemethyl-3-oxobutyrate, 8.7 ml of methylene chloride, and 1.2 ml of methanol were placed in an autoclave having a volume of 100 ml, and reacted at 60°C for 21 hours under a hydrogen pressure of 50 atm.

Analysis by HPLC (column: COSMOSIL 5C-18AR, 4.6 x 250 mm; solution: MeCN/H₂O = 30/70; flow rate: 1 ml/min; detection wavelength: 254 nm) revealed that syn-alcohol and anti-alcohol were produced in the ratio of 87:13. Further, optical purity of the hydrogenation product was measured as follows: 25 mg of the hydrogenation product, 75 mg of (S)-α-trifluoromethylphenylacetylchloride, and 0.5 ml of pyridine were mixed and stirred; and the produced (S)-α-methoxy-α-trifluoromethylacetate was subjected to HPLC (column: COSMOSIL 5SL, 4.6 x 250 mm; solution: hexane/THF/methanol = 1000/100/1; flow rate: 1 ml/min; detection wavelength: 254 nm). The optical purity value was 99%e.e. in terms of syn-alcohol.

## Claims

1. A method for producing an optically active diphosphine having the following general formula I, 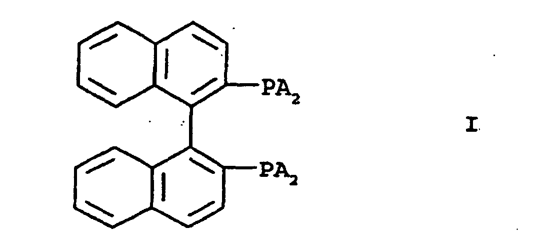 wherein A indicates a phenyl group ; a mono- to tri-substituted phenyl group, wherein each substituent in the substituted phenyl group is selected from halogen atoms, (C₁-C₄) alkyl groups, (C₁-C₄)alkoxy groups or (C₁-C₄)halogenated-alkoxy groups such that one or more of the substituents may be the same or different; a naphthyl group; a (C₁-C₄)alkyl naphthyl group; or a (C₁-C₄)alkoxy naphthyl group,
**characterized in that** 2,2'-bis(trifluoromethanesulfonyloxy)-1,1'-binaphthyl expressed by the following general formula II, 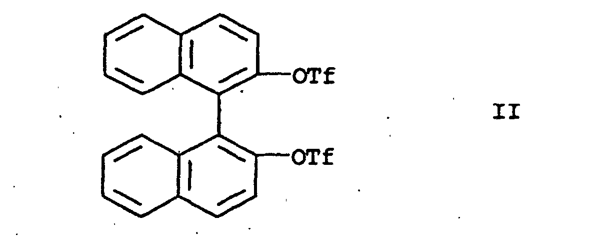 wherein Tf indicates a trifluoromethanesulfonyl group, is reacted with a phosphineoxide compound expressed by the following chemical formula III,
A₂P(O)H III
wherein A indicates the same group as the above general formula I,
in the presence of a Ni-phosphine complex, to give an optically active diphosphinemonooxide compound IV 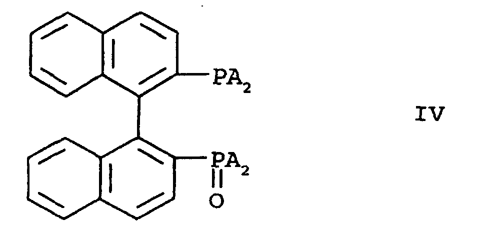 or a mixture containing an optically active diphosphine compound I and said compound IV, and said compound IV or the mixture containing it is reduced to give compound I.

2. The method for producing an optically active diphosphine according to Claim 1, wherein A in the general formulae I and III in Claim 1 is selected from a phenyl group, a 4-tolyl group, a 3-tolyl group, a 3,5-xylyl group, a 3,4,5-trimethylphenyl group, a 4-methoxyphenyl group, a 3-methoxyophenyl group, a 3,5-dimethoxyphenyl group, a 3,4,5-trimethoxyphenyl group, a 3,5-dimethyl-4-methoxyphenyl group, a 3,4-methylenedioxyphenyl group, a 4-tert-butylphenyl group, a 3,5-di-tert-butylphenyl group, a 4-chlorophenyl group, a 4-fluorophenyl group, a 4-trifluoromethylphenyl group, a 3-trifluoromethylphenyl group, a 4-dimethylaminophenyl group, a 4-biphenyl group, a 3-biphenyl group, an α-naphthyl group, a β-naphthyl group, a 6-methoxy-α-naphthyl group, and a 6-methoxy-β-naphthyl group.

## Patentansprüche

1. Verfahren zur Herstellung eines optisch aktiven Diphosphins mit der nachstehenden allgemeinen Formel I, 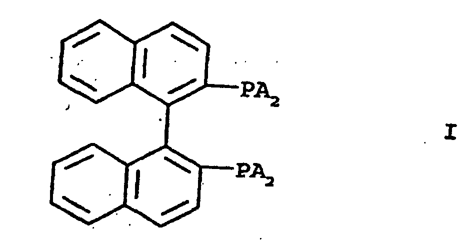 wobei A eine Phenylgruppe; ein mono- bis trisubstituierter Phenylrest, wobei jeder Substituent in dem substituierten Phenylrest aus Halogenatomen, (C₁-C₄)-Alkylresten, (C₁-C₄)-Alkoxyresten oder halogenierten (C₁-C₄)-Alkoxyresten ausgewählt ist, so dass einer oder mehrere der Substituenten gleich oder verschieden sein können; eine Naphthylgruppe; ein (C₁-C₄)-Alkyl-Naphthylrest oder ein (C₁-C₄)-Alkoxy-Naphthylrest ist,
**dadurch gekennzeichnet, dass** 2,2'-Bis(trifluormethansulfonyloxy)-1,1'-binaphthyl der nachstehenden allgemeinen Formel II, 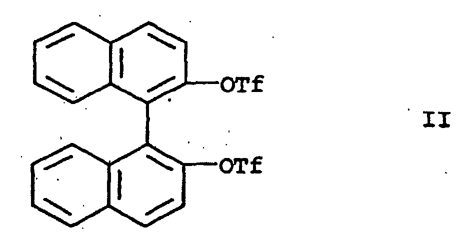 wobei Tf eine Trifluormethansulfonylgruppe ist, mit einer Phosphinoxid-Verbindung der nachstehenden chemischen Formel III,
A₂P(O)H III
wobei A derselbe Rest wie in der vorstehenden allgemeinen Formel I ist, in der Gegenwart eines Ni-Phosphinkomplexes umgesetzt wird, um eine optisch aktive Diphosphinmonooxid-Verbindung IV 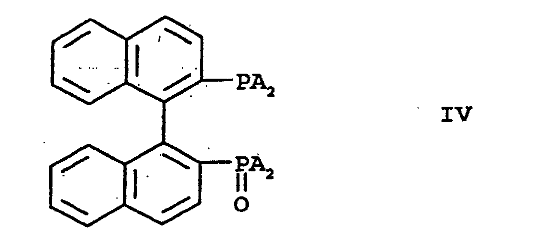 oder ein Gemisch, das eine optisch aktive Diphosphin-Verbindung I und die Verbindung IV enthält, zu ergeben und wobei die Verbindung IV oder das sie enthaltende Gemisch reduziert wird, um Verbindung I zu ergeben.

2. Verfahren zur Herstellung eines optisch aktiven Diphosphins nach Anspruch 1, wobei A in den allgemeinen Formeln I und III in Anspruch 1 aus einer Phenylgruppe, einer 4-Tolylgruppe, einer 3-Tolylgruppe, einer 3,5-Xylylgruppe, einer 3,4,5-Trimethylphenylgruppe, einer 4-Methoxyphenylgruppe, einer 3-Methoxyphenylgruppe, einer 3,5-Dimethoxyphenylgruppe, einer 3,4,5-Trimethoxyphenylgruppe, einer 3,5-Dimethyl-4-methoxyphenylgruppe, einer 3,4-Methylendioxyphenylgruppe, einer 4-tert-Butylphenylgruppe, einer 3,5-Di-tertbutylphenylgruppe, einer 4-Chlorphenylgruppe, einer 4-Fluorphenylgruppe, einer 4-Trifluormethylphenylgruppe, einer 3-Trifluormethylphenylgruppe, einer 4-Dimethylaminophenylgruppe, einer 4-Biphenylgruppe, einer 3-Biphenylgruppe, einer α-Naphthylgruppe, einer β-Naphthylgruppe, einer 6-Methoxy-α-naphthylgruppe und einer 6-Methoxy-β-naphthylgruppe ausgewählt ist.

## Revendications

1. Procédé pour la production d'une diphosphine optiquement active ayant la formule générale I suivante, 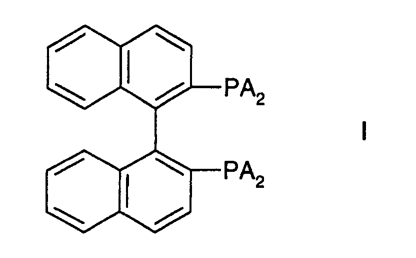 (où A indique un groupe phényle ; un groupe phényle mono- à tri-substitué, dans lequel chaque substituant dans le groupe phényle substitué est choisi parmi les atomes d'halogène, des groupes alkyle en C₁-C₄, des groupes alcoxy en C₁-C₄ ou des groupes alcoxy halogénés en C₁-C₄ de telle sorte qu'un ou plusieurs des substituants peuvent être identiques ou différents ; un groupe naphtyle ; un groupe (alkyle en C₁-C₄)-naphtyle ; ou un groupe (alcoxy en C₁-C₄)-naphtyle),
**caractérisé en ce que** l'on fait réagir du 2,2'-bis(trifluorométhanesulfonyloxy)-1,1'-binaphtyle représenté par la formule générale II suivante, 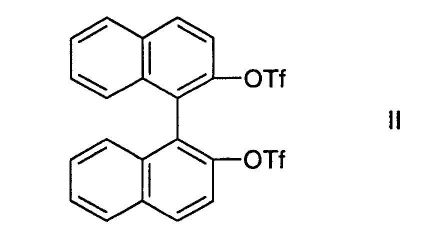 où Tf indique un groupe trifluorométhanesulfonyle,
avec un composé d'oxyde de phosphine représenté par la formule chimique III suivante,
A₂P(O)H III
où A indique le même groupe que dans la formule générale I ci-dessus, en présence d'un complexe de Ni-phosphine, pour fournir un composé de monooxyde de diphosphine optiquement actif IV, 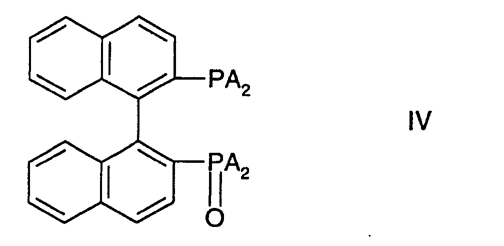 ou un mélange contenant un composé de diphosphine optiquement actif I et ledit composé IV, et ledit composé IV ou le mélange le contenant est réduit pour fournir le composé I.

2. Procédé pour la production d'une diphosphine optiquement active selon la revendication 1, dans laquelle A dans les formules générales I et III dans la revendication 1 est choisi parmi un groupe phényle, un groupe 4-tolyle, un groupe 3-tolyle, un groupe 3,5-xylyle, un groupe 3,4,5-triméthylphényle, un groupe 4-méthoxyphényle, un groupe 3-méthoxyphényle, un groupe 3,5-diméthoxyphényle, un groupe 3,4,5-triméthoxyphényle, un groupe 3,5-diméthyl-4-méthoxyphényle, un groupe 3,4-méthylènedioxyphényle, un groupe 4-tert-butylphényle, un groupe 3,5-di-tert-butylphényle, un groupe 4-chlorophényle, un groupe 4-fluorophényle, un groupe 4-trifluorométhylphényle, un groupe 3-trifluorométhylphényle, un groupe 4-diméthylaminophényle, un groupe 4-biphényle, un groupe 3-biphényle, un groupe α-naphtyle, un groupe β-naphtyle, un groupe 6-méthoxy-α-naphtyle et un groupe 6-méthoxy-β-naphtyle.
